# EUROPEAN PATENT SPECIFICATION

(11) **EP 3 033 211 B1**
(45) Date of publication and mention of the grant of the patent: **18.01.2023**
(21) Application number: 14761963.9
(22) Date of filing: 13.08.2014
(51) Int. Cl.: B29C 48/08, B29C 48/31, B29C 48/92, B29C 48/88

(54) **METHOD FOR PROVIDING MARKS ON EXTRUDED FILMS**
VERFAHREN ZUR MARKIERUNG VON EXTRUSIONSFOLIEN
PROCÉDÉ POUR FOURNIR DES MARQUES SUR DES FILMS EXTRUDÉS

(30) Priority: 14.08.2013 EP 13180391; 14.08.2013 US 201361865695 P
(43) Date of publication of application: 22.06.2016
(73) Proprietor: Electronic Systems S.p.A., 28015 Momo Novara (IT)
(72) Inventor: MARTENA, Florinda, I-28015 Momo Novara (IT); TRIZZINO, Stefano, I-28015 Momo Novara (IT)
(74) Representative: Vossius & Partner Patentanwälte Rechtsanwälte mbB
(86) International application number: PCT/EP2014/067361
(87) International publication number: WO 2015/022376

(56) References cited:
- DE-A1-102004 039 497
- JP-A- H0 788 934
- JP-A- H1 177 805
- JP-A- 2000 171 218
- JP-A- 2002 172 679
- JP-A- 2010 167 584
- US-A- 4 255 365
- US-A1- 2009 243 133

## Description

The present invention relates to a method for providing marks on extruded films, in particular on stretched films as well as to a method for automatically detecting marks on extruded films and a method for automatically controlling a film extruder for manufacturing the extruded films.

US-A-5411695 relates to a method for producing a thermoplastic resin film. It particularly deals with a bowing phenomenon which occurs in the process of transverse drawing of the thermoplastic resin film. According to this document the bowing phenomenon can be visualized by drawing straight lines on the surface of the film in the direction of transport. The bowing phenomenon can be reduced by not only considering manufacturing processes and apparatus but also by consideration of the characteristics of the film itself and by applying specific cooling in a cooling zone followed by heat setting of the film.

US-A-3904725 relates to a process for quenching molten thermoplastic film in an apparatus which comprises a movable quenching surface, an extrusion dye positioned above the quenching surface to extrude a polymeric film from the dye onto the quenching surface and lateral point pinning means positioned above the quenching surface and over each lateral edge of the film. It is described that in the preparation of thermoplastic polymeric film using a flat extrusion process, a molten web is cast onto a cool quenching surface. Although the molten sheet may be substantially uniform in thickness as it issues from the parallel dye lips, tension on the free span between the dye and the quenching surface causes a contraction in the width of the film which results in a greatly increased thickness at the edges of the film. It is further stated that the contraction of the web continues through a cooling process. It is therefore suggested to use edge pinning means for stabilizing the film width. By providing a certain direction of additional pinning force at the portion of the lateral edge of the film the preparation of films that do not exhibit marked fluctuations in thickness adjacent the edge can be achieved. As pinning means electrostatic point probes or air jets are used.

US-A-4255365 describes a process for promoting uniform thickness in cast webs of thermoplastic material comprising of variable air forces selectively directed toward a cast web with pinned edges along the line of initial proximity with a quenching surface. The air is provided to the web to provide rapid cooling to specific areas of the casted web. On each lateral side of the casted web one or more air jets can be provided.

JPH1177805A, JP2002172679A, JP2000171218A and JP2010167584A further describe methods for marking and analysing extruded sheets for controlling thickness.

The before-mentioned documents aim to avoid the bowing phenomenon and thickness variations of the casted film.

The present invention aims to provide a method for providing marks on extruded films, in particular on stretched films. It is a further object of the present invention to provide a method for automatically detecting marks on extruded films. It is a further object of the present invention to provide a method for automatically controlling a film extruder in particular for automatically controlling the thickness of extruded films.

These objects are achieved with the features of the independent claims. The dependent claims relate to further aspects of the present invention.

The present invention is based on a general concept of using one or more nozzle means for directing a gas stream to a surface of the film exiting the extrusion lip of a film extruder. By using a gas stream the extruded film can be locally cooled to create a local mark.

The present invention is based on another general concept of using one or more nozzle means for directing fluorescent ink directed to a surface of the film exiting the extrusion lip of a film extruder. By directing the substance to the surface a local mark can be created which is invisible to the human eye.

By combining the gas nozzle means and the substance nozzle means a local mark by cooling and/or a local mark by a substance is created. This might be done through a combined nozzle means configured to selectively apply gas and/or a substance to the film surface or by two separate nozzle means located next to each other one for applying gas and the other one for applying a substance.

The local mark can be detected at a position downstream of the extrusion lip and can then be used for a specific control of the extrusion lip of the film extruder.

Previously marking of a film was made by using for example a wax pen to draw a line on the film. However, for marking the film with a wax pen the pen had to be brought into contact with the surface of the film. This way of marking is quite difficult because on the one hand the film should not be damaged by the contact with the wax pen and on the other hand for drawing a line on the film a certain contact pressure is needed.

Another alternative to mark the film is to intentionally change the thickness at a certain position of the extruded film by changing the width at a certain position of the extrusion lip of the film extruder. However, this type of marking has a high response time and is therefore not convenient.

The present invention has the advantage that by marking the film using one or several gas streams and using a substance a high response time can be achieved and no contact is necessary for providing the mark. By providing a mark of a substance, wherein the substance is fluorescent ink, which is directed to the surface of the film to create a local mark which is invisible to the human eye has the advantage of not creating a thickness variation in the film. By using a mark of invisible ink the part of the film where the mark is applied to can still be used, whereas a visible mark or a thickness variation mark has to be cut away after processing of the film.

According to the present invention at least one nozzle means is provided adjacent to the extrusion lip of the film extruder. Preferably, the nozzle means is configured to be movable in a scanning manner in parallel to the extrusion lip of the film extruder along the width of the extruded film or web. Preferably the position of each nozzle means has a specific known relationship with one or several adjusting means for example with one or several bolts with which the extrusion lip of the film extruder can be specifically controlled at respective positions along the width of the extrusion lip.

According to an aspect of the present invention an array of a plurality of nozzle means is used, wherein the array is preferably a linear array which is oriented in parallel to the extrusion lip of the film extruder. According to another aspect of the invention the individual nozzle means are arranged at predetermined distances from each other and more preferably at equal distances from each other, preferably equivalent to the width of adjusting means like bolts of a film extruder or a multiple of the bolts.

According to a further aspect of the present invention the nozzle means are configured to blow a gas stream (also referred to as gas jet) and/or a substance to the surface of the film wherein the gas stream and/or the substance has a predetermined cross section. The gas stream and/or substance is suitable to provide a local cooling and/or a local mark at a part of the film material. As a result the part of the film being cooled by the gas stream and/or being marked by the substance represents a local mark having a predetermined dimension, preferably a predetermined diameter or a predetermined width and length.

According to still another aspect of the invention the nozzle means are configured to be arranged in relation to the extrusion lip of the film extruder such that the gas stream and/or the substance can be directed to the local position within at least one border region of the extruded film, i.e. on one or both lateral sides of the extruded film.

An apparatus may comprise a frame which is adapted to support at least one nozzle means, wherein the nozzle means is configured to be movable in a scanning manner in parallel to the extrusion lip of the film extruder along the width of the extruded film or web and/or to support a linear array of nozzle means at one or both ends of the extrusion lip of the film extruder. In that case a plurality of gas streams and/or substance can be directed to either one or both border regions of the extruded film. The one or both linear arrays of nozzles are arranged substantially along a line parallel to the extrusion lip of the film extruder.

According to a further aspect of the invention a plurality of nozzle means are arranged in a linear array wherein a number n of nozzle means is preferably in the range 1 to 30, preferably of 2 to 20, more preferably 5 to 10.

According to a further aspect of the invention the nozzle means are arranged in a 1 to m correspondence with respect to individual adjusting means for adjusting the local width of the film extruder for example the bolts present in the film extruder for adjusting the local width. In that case m can preferably be in the range of 1 to 20, more preferably 1 to 5. Thus, in a 1 to m correspondence there is one nozzle means for every m-th individual adjusting means. For example, in case of a 1 to 1 correspondence there is one nozzle means for each individual adjusting means. Alternatively, any arbitrary combination can be used, wherein one nozzle means is arranged at one arbitrarily selected individual adjusting means.

An apparatus may comprise control means for controlling the delivery of gas and/or substance to each one of the nozzle means. More specifically the control means can control the delivery of gas and/or substance to one, two, three or more individual nozzle means independently or to certain specific groups of nozzle means. For example gas and/or substance can be delivered at the same time to all nozzle means. Alternatively, gas and/or substance can be delivered to only one of the nozzle means at a time. By intermittently providing gas and/or substance to the nozzle means dot like marks can be created. By continuously providing gas and/or substance for a predetermined time to the nozzle means a linear mark can be created. Depending on whether one, two, three or more or all nozzle means are provided with gas and/or substance intermittently or continuously an array of dot like marks or an array of linear marks can be created. It is also possible to create after each dot like mark one linear mark or after two or more dot like marks one or more linear marks. The specific pattern of dot like marks and linear marks can be used to distinguish between certain time points of providing marks on the extruded films.

According to another aspect of the present invention the temperature of the gas stream is lower than the temperature of the film which exits from the film extruder. Thus, the gas stream provides a cooling of the film material which results in a detectable mark in the form of a local change of the characteristics of the film, in particular the physical characteristics of the film, preferably a detectable local thickness variation in comparison to other parts of the film which are not cooled by the gas stream. Preferably, due to cooling of a film material the thickness of the film is greater than the thickness of adjacent parts in the neighbour region.

An apparatus may provide automatically detecting a mark on extruded films in particular on stretched films which comprises a detector for detecting said marks on the film created by a gas stream to the surface of the film and in the form of an invisible substance that is invisible to the human eye on the film's surface, preferably a detector for detecting thickness variations of the film and/or marks in the form of a substance on the films surface. The detector can comprise a gauging instrument for measuring the thickness of the film and/or optical means for detecting said substance on the films surface. The system further comprises means for determining the lateral position of the detected marks in relation to a reference position for example the edge on one or both lateral sides of the film.

In case the film changes the width after being cast from the extruder the lateral position of the detected marks can be brought into a relation to the lateral position where the mark is created. More specifically if there is only one nozzle means the position where the mark is created on the film can be detected by the detector by detecting for example a thickness variation of the film which results from the gas stream from said nozzle means and/or by detecting optically the local mark which results from the substance from said spray nozzle. The detected position can be brought into a specific relationship to the position of the nozzle means or the position where the mark is created.

A system may provide automatic controlling a film extruder in particular for automatically controlling the thickness of extruded films, in particular of stretched films which are produced with the film extruder. The system comprises an apparatus for creating marks as described before and a system for detecting marks and for providing information of the lateral position of the marks as described before. It further comprises a gauging instrument for measuring the thickness of the film preferably the thickness of the film over its whole width. The system additionally comprises control means for controlling individual adjusting means for adjusting the local width of the film extruder. The control is performed on the basis of measurement results of the gauging instrument and the information of the lateral position of the marks.

The present invention further provides a method for providing marks on extruded films, in particular on stretched films, which are exiting an extrusion lip of a film extruder. This method comprises the step of directing at least one invisible substance that is invisible to the human eye and at least one gas stream, preferably an air stream to a surface of the film exiting the extrusion lip of the film extruder in such a manner that the gas stream locally causes a cooling of the extruded film to create a local mark. The present method preferably uses an apparatus for providing marks on extruded films as described above. Thus, for directing a gas stream to the surface of the film a respective nozzle means is used.

Furthermore, the present invention provides for a method based on another general concept for providing marks on extruded films, in particular on stretched films, which are exiting an extrusion lip of a film extruder. This method comprises the step of directing at least one invisible substance, wherein the invisible substance is fluorescent ink, and a gas stream to a surface of the film exiting the extrusion lip of the film extruder using at least one nozzle means, in such a manner that the substance creates a local mark on the extruded film.

A combined method comprises the steps of directing a gas stream and directing a substance to the surface of the film exiting the extrusion lip of the film extruder is employed. This might be done through a combined nozzle means configured to selectively apply gas and/or a substance to the film surface or by two separate nozzle means located next to each other one for applying gas and the other one for applying a substance.

According to an aspect of the present invention two or more gas streams and/or substance are directed to the surface of the film. The gas streams and/or substance can be switched on and off in such a way that either 1, 2 or more gas streams and/or substance are active simultaneously or at a different time period. When using an array of plurality of nozzle means, preferably a linear array which is arranged in parallel to the extrusion lip of the film extruder several marks can be created which are placed at predetermined distances from each other. Preferably the marks are at equal distance from each other.

According to a further aspect each gas stream is created by blowing a gas jet to the surface of the film. The gas jet has a predetermined cross-section and preferably the gas jet is suitable to provide a local cooling at a part of the film material, more preferably within a well defined area of the surface of the film material. Preferably, the local cooling is effective through the film material such that the whole material under the well defined area is cooled. As a result the cooled part of the film has a predetermined dimension when seen on the surface of the film, preferably a predetermined diameter or a predetermined width and length. For example, one or several continuous linear marks which are spaced from each other in the lateral direction can be provided on the film. Alternatively, the spray nozzle for creating at least one mark comprises at least one nozzle means for directing fluorescent ink to a surface of the film exiting the extrusion lip of the film extruder, wherein the nozzle means are configured and arranged in such a manner that the substance creates a local mark having a predetermined cross-section and preferably the gas jet is suitable to provide a local mark at a part of the film material, more preferably within a well defined area on the surface of the film material.

According to a further aspect the gas stream and/or substance is directed to a local position within one or both border regions of the film. Alternatively, a plurality of gas streams and/or substance can be directed to one or both border regions of the film. In such a way, several marks can be created on both lateral sides of the film which are arranged along a line parallel to the extrusion lip of the film extruder.

According to another aspect of the invention a plurality of nozzle means, i.e. a number n of nozzle means are arranged in a linear array. Such a linear array can be provided on both border regions of the film. The arrangement of the nozzle means is preferably in a 1 to m correspondence with respect to individual adjusting means of the film extruder. Such adjusting means are configured to adjust the local width of the film extruder so that the thickness of the film extruded from the film extruder can be adjusted. Preferably the number of nozzle means is the same as the number of adjusting means. Thus, there is a 1 to 1 correspondence. Alternatively, one nozzle means is provided for every m-th adjusting means with m being in the range of 1 to 20, more preferably 1 to 5. Any arbitrary combination of each one nozzle means with an arbitrary selected individual adjusting means can also be used.

According to a further aspect the delivery of gas and/or substance is controlled to each one of the nozzle means independently. The gas and/or substance can be provided intermittently to one or more of the plurality of nozzle means or even to all nozzle means at the same time. In this way, an array of dot like marks can be created by quickly switching on and off the gas stream and/or substance stream. In addition or alternatively, the gas and/or the substance can be stream and/or substance stream. In addition or alternatively, the gas and/or the substance can be continuously provided for a predetermined time to one or more or all nozzle means. In that case an array of linear marks can be created. The length of the linear marks depends on the ON-time on the gas supply and/or substance supply and the speed with which the film is moving from the film extruder to a chilling roll downstream of the film extruder.

According to a further aspect the temperature of the gas is controlled to be lower than the temperature of the film exiting the film extruder. The temperature difference is selected in such a manner that the cooling of the film material results in a detectable mark in the form of a local change of the characteristics of the film, preferably a detectable local thickness variation in comparison to other parts of the film not being cooled by the gas stream. More specifically, the local thickness variation can be a greater thickness in parts of the film which are cooled by the gas stream. When exiting the extrusion lip the film has a certain temperature and when being transported to a first chill roll thermal contraction of the film occurs resulting in a neck-in portion. The gas stream causes a local cooling of the film that comes out of the extrusion lip which results in a specific thickness at this part of the film.

According to another aspect of the present invention these marks on the extruded films are automatically detected by using a detector preferably a gauging instrument for measuring the thickness of the film and/or optical means for detecting said substance on the films surface. For example, a measurement sensor head detects thickness peaks at predetermined positions that are associated to respective positions where the gas stream cools the film. The lateral position of the detected marks is in a specific relation to a reference position for example to one or both edges of the film. Furthermore, the optical means for detecting the lateral position of the mark at the neck-in portion according to one aspect of the present invention comprises a sensor, preferably an optical camera, configured to detect the substance at the neck-in portion.

According to another aspect of the present invention a method for automatically controlling a film extruder in particular for automatically controlling the thickness of extruded films, in particular of stretched films uses the before-described method for marking and the before-described method for detecting marks on a film. It further comprises the step of measuring the thickness of the film over the whole width using a gauging instrument and of controlling individual adjusting means of a film extruder on the basis of the measurement results of the gauging instrument and the information of the lateral position of the marks by using further control means.

Air blow marking can be performed in cycles which are started either manually by an operator or which can be started automatically in case of events which are significant in the manufacturing process. In particular, if events are significant on the neck-in effect for example a change of production, a change of the width of the film, a change of the distance between the dye and the chill roll or a change of vacuum box conditions a cycle of air blow marking according to the present invention can be performed.

The methods as claimed and described herein can be used in combination with an apparatus and a method for automatically analyzing extruded films, i.e. auto-mapping of the neck-in portion, as described in a co-pending patent application of the same applicant filed on the same day as the present patent application. Therefore, the content of this co-pending patent application with the title apparatus and method for automatically analyzing extruded films is fully incorporated herein by reference.

### Brief description of Figures

The present invention will now be explained with reference to preferred embodiments and the drawings, in which:
Fig. 1 shows a schematic perspective view of a system for manufacturing films comprising an apparatus for providing marks on films.
Fig. 2 shows a schematic side view of a system as shown in Figure 1,
Fig. 3 shows a schematic diagram as a top view on the extruded film in the system of Figure 1
Fig. 4 shows a schematic diagram of the measurement result representing the thickness variation resulting from marks created on an extruded film,
Fig. 5 a) and b) show a schematic perspective view of a system for manufacturing films and
Fig. 6 shows a schematic diagram as a top view on the extruded film in the system of Figure 5.

### Detailed description of the invention

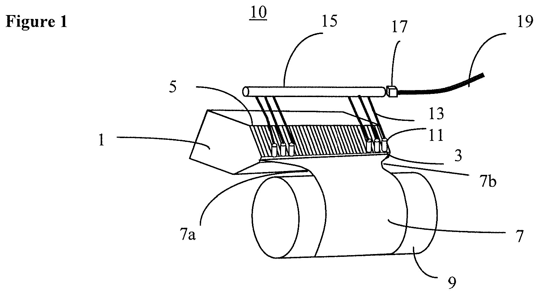

Fig. 1 shows a schematic view of a system which comprises an apparatus for creating marks according to an embodiment of the present invention. Figure 1 shows a film extruder 1 comprising an elongated extrusion lip 3 and a plurality of adjusting means 5 being arranged adjacent to each other along the width of the extrusion lip. The adjusting means 5 can comprise respective bolts, and the adjusting means can be used for changing the width of the extrusion lip 3 and more specifically wherein individual adjustments can be made to adjust the thickness individually at specific parts of the extrusion lip. Figure 1 further schematically shows an extruded film 7 which exits the extrusion lip 3 and which is rolled on a chill roll 9. As further schematically shown in Figure 1 the extruded film has a wider width at the exit of the film extruder which substantially corresponds to the width of the extrusion lip 3. Due to a thermal contraction the width of the extruded film is smaller when reaching the chill roll 9. More specifically, due to this thermal contraction the extruded film comprises on the left lateral side a neck-in portion 7a and on the right lateral side a neck-in portion 7b.

Fig. 1 further schematically shows the apparatus 10 for providing marks on the extruded film. The apparatus 10 comprises a plurality of nozzles 11 which are arranged close to the extrusion lip and directed to the top surface of the film. Fig. 1 schematically shows three nozzles 11 on both lateral sides of the extruded film. In this example, each nozzle 11 is connected via a respective line 13 to a manifold 15. The manifold 15 for distributing gas to the several lines 13 is connected at one end via an electro valve 17 to a compressed air supply 19. The compressed air supply 19 can be connected to a compressor (not shown) for supplying the compressed air. The apparatus 10 comprising the nozzle 11 can be supported by a first frame which is arranged above the extrusion lip 3.

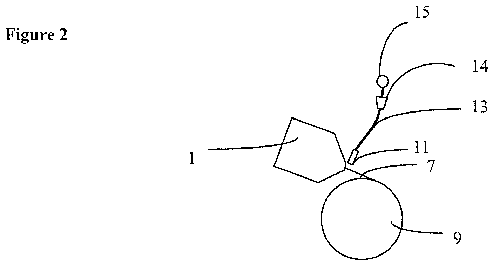

As shown in the side view of Fig. 2 one air regulator 14 can be provided for each line 13 connecting one nozzle 11 with the manifold 15. As schematically shown in Figures 1 and 2 the nozzles are arranged along a line parallel to the extrusion lip 3. The tip end of the nozzle 11 is arranged adjacent to a respective adjusting means 5 of the film extruder 1. In the example of Fig. 1 three nozzles 11 are arranged on both lateral sides of the film, i.e. in a border region of the film. More specifically, as schematically shown the outer most nozzle 11 is arranged on the left side at a specific distance from the left end of the extrusion lip, i.e. it is placed close to the fourth adjusting means from the left side of the extrusion lip. The second and third neighbour nozzle is arranged at equal distances such that the second nozzle 11 is arranged adjacent to the sixth adjusting means 5 and the third nozzle 11 is arranged close to the eighth adjusting means 5. The other three nozzles are similarly arranged on the right lateral side of the extrusion lip. Thus, there is a 1 to 2 correspondence between the number of nozzles on both lateral sides and the respective number of adjusting means in these border regions. This is just an example. Any arbitrary combination can be used, for example, a first nozzle is arranged at the second adjusting means, a second nozzle is arranged at the fifth adjusting means, a third nozzle is arranged at the tenth adjusting means and the fourth nozzle is arranged at the twentieth adjusting means. The arrangement on the other lateral side can be mirror-symmetric but also non-symmetric.

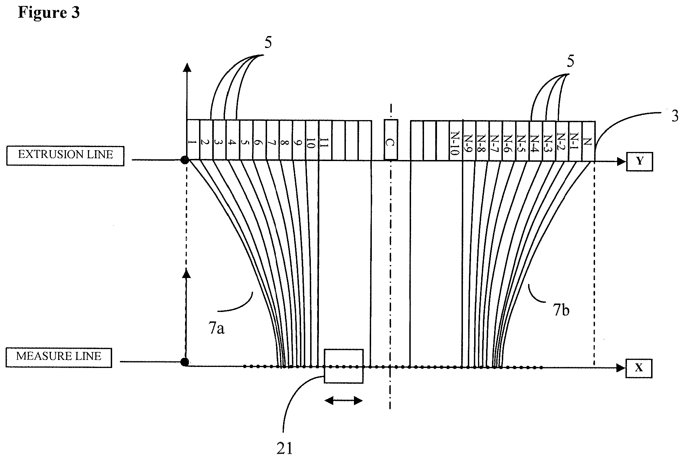

Fig. 3 schematically shows a top view of an extruded film coming out from the extrusion lip 3 wherein between the extrusion line Y and a measurement line X a neck-in portion 7a is formed on the left side and a neck-in portion 7b is formed on the right side of the schematic drawing of Fig. 3. Fig. 3 illustrates that the contraction of the film specifically occurs along the border region of a film on both lateral sides. Fig. 3 further shows schematically a number N of adjusting means 5 designated with numbers 1, 2, 3 to 11 and N-10, N-9 to N. In the middle region between the adjusting means 10 to N-9 substantially no thermal contraction occurs. This is again an example. The numbers depend for example on the width of the neck-in area or production and line conditions like viscosity of the material or mechanical dimensions of the production line. The total number of adjusting means N may be in the range of 30 to 350. Therefore, in Fig. 3 both lateral sides are shown in an enlarged manner. As can be seen the width of the film along the extrusion line is wider than the width along the measurement line. As can be further seen there is a specific relation of the position of the part of the film exiting for example the adjustment means 1, i.e. the position along the axis Y and the respective position of this part of the film along the measurement line which corresponds to a position along the axis X. In other words, there is a specific function y=f(x). Those parts which exit the extrusion lip 3 at a particular individual adjusting means 5 can be marked with the present system by blowing air to the surface of the film. By using an array of air blows located above the adjusting means, i.e. the bolts on both lateral sides of the film extruder local film cooling can be caused. The air flow can be simultaneously or individually be directed to the surface of the film such that the film coming out of the extrusion lip 3 is cooled and as a consequence a mark is created on the film having a specific thickness.

By using a measurement sensor head 21 along the measurement line X the thickness can be measured and the marks can be detected. This measurement sensor head can move back and forth along the measurement line X to measure the thickness of the film over its whole width. For example, a second frame (not shown) may be arranged above the measurement line X along which the measurement sensor head traverses.

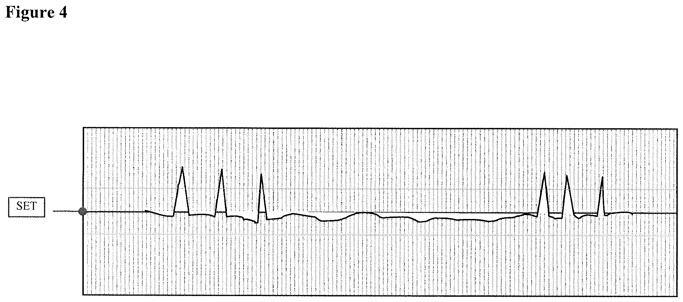

As schematically shown in Fig. 4 the film thickness profile comprises three peaks on both sides wherein one peak corresponds to a respective mark detected by the measurement sensor head 21. The thickness peaks schematically shown in Fig. 4 correspond to linear marks created on respective parts of the film when exiting the extrusion lip. More specifically these marks correspond to respective adjusting means 5 where a nozzle 11 directs a gas stream on the surface of the extruded film.

These data can be processed to adjust the function y=f(x) in a way that gives more accuracy in the characterization of the real film contraction. The air blow marking cycle can be initiated manually or automatically. The air blow marking can be used continuously or in the case of events which are significant on the manufacturing of the extruded film in particular significant on the neck-in effect. For example, in case of a change of production, a change of the width of the film, a change of the distance between the dye and the chill roll and a change of vacuum box conditions the air blow marking cycle can be initiated.

In addition, to marking by a gas nozzle as described above it is possible to create a mark using a spray nozzle situated above and/or below the film at the extrusion lip. In this embodiment, a substance that is a liquid or paste-like material, preferably an ink or a resin is directed to the surface of the film to create a mark which is invisible to the human eye. The mark is positioned in a defined relationship with respect to a specific part of the extrusion lip. In the following, ink is used from the list of substances as to describe the embodiment by example. The ink can be of any material and/or color to create a mark on the extruded film which can be detected by an appropriate sensor, e.g. an optical camera or other non-contact type sensors like beta ray, x-ray, infrared sensors or interference type sensors. The ink is a fluorescent ink that is invisible for the human eye on the extruded film. Fluorescent inks particularly suitable might either be UV curable or thermally dried. This has the advantage that the marked part of the extruded film can stay on the extruded film, i.e. it does not have to be cut away in post-processing. The use of an ink spray nozzle is advantageous as there is no contact between the nozzle and the extruded film. Furthermore, the thickness of the film is not changed apart from the thin layer of ink deposited on the film.

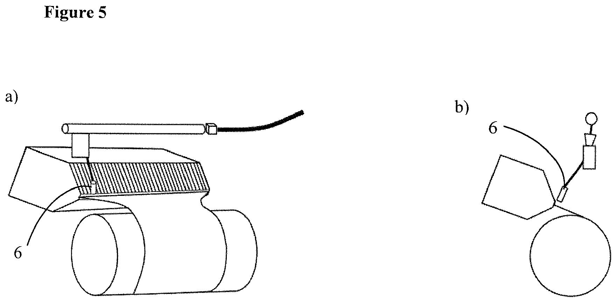

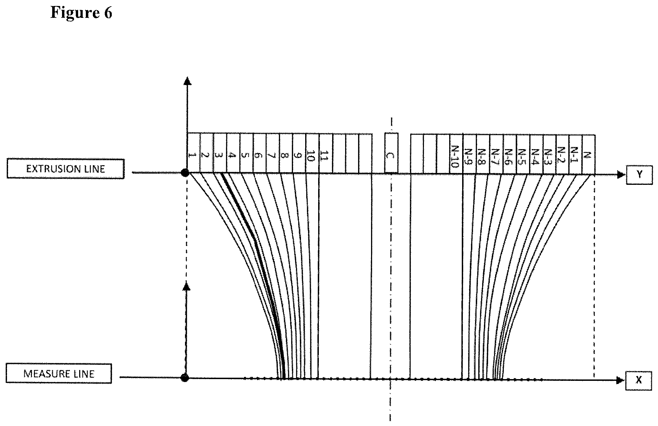

Next, the marking by an ink spray nozzle will be described referring to Fig. 5 and Fig. 6. The description of features which have been described above already will not be repeated. Rather, full reference is made to the above description and the new features of this specific embodiment will be described in detail. According to Fig. 5 the fluorescent ink will be put into a pressure vessel connected to an air pressure system with a pressure regulating valve in between. An electric valve in the front of the spray nozzle 6 is provided to control the application of ink to the extruded film. The ink spray nozzle 6 is situated in scanning traversing position on a beam that has a mechanical lay out and assembly compatible with the lay out and the assembly of the machinery (extrusion die plus chill roll) where it is mounted on. The ink spray nozzle 6 is supported by a vertical translation to support the installation in narrow spaces. Furthermore, the ink spray nozzle 6 can have different spray angles and different spray volumes and can mark the film with correspondence to any specific part of the extrusion lip or the respective bolt, preferably one of the bolts at the extrusion lip in the border region. Fig. 6 is an illustration showing the marking of the bolt 3 of the extrusion lip (indicated by the thick black line). As can be seen, the mark on the film follows the specific form of the neck-in portion.

Even though the above described marking apparatus according to Fig. 5 has been described by employing one spray nozzle, multiple spray nozzles in one array corresponding to the respective bolts can be employed. Furthermore, it is possible to provide one or two opposite transversal scanning spray nozzles, which, depending on the peculiarity of the products may spray a gas that leaves a mark preferably as a change of thickness that is detected by the thickness measurement system, and/or spraying a substance, for example an ink, that leaves a visible or invisible mark detected by an optical system built-in with the sensor heads of the thickness measurement system.

A detection system is outlined next. The ink is detected by a sensor, preferably by an optical camera. Preferably, the optical camera is mounted onto the first measurement sensor head 21 as shown in Fig. 3. The optical camera can be used to detect visible ink. In case fluorescent ink is used to mark the extruded film, an additional light source might be used to make the mark, i.e. the fluorescent ink, visible for detection by an optical camera. Preferably, the light source is mounted onto a second measurement sensor head. The second sensor head might be movable back and forth in the same direction as the first sensor head but independently from each other. The source of light can be selected according to the choice of ink used for the specific application and/or the camera system can be selected accordingly. As described above the sensor can be selected to be any suitable sensor to detect the mark on the extruded film and the additional light source is selected according to the sensor used or can be omitted completely.

Again, the track left by the ink spray nozzle 6 on the film allows determining a univocal correlation between the bolt at the extrusion lip and the correspondent material stripe running below the gauge. Using both the information of the location of the mark and the information from the two edge detectors the functional relationship like the function f(x) can be adjusted in a perfect manner, preferably to respond to changes of surrounding conditions as described above.

## Claims

1. A method for providing marks on extruded films (7), in particular on stretched films, which are exiting an extrusion lip (3) of a film extruder (1), comprising the step of:
directing at least one invisible substance that is invisible to the human eye to a surface of the film exiting the extrusion lip (3) of the film extruder (1) using at least one nozzle means (11), in such a manner that the invisible substance creates a local mark on the extruded film (7), and
**characterized in that** the invisible substance is a fluorescent ink.

2. Method according to claim 1, comprising the step of directing the invisible substance and a gas stream to the surface of the film exiting the extrusion lip of the film extruder, wherein the gas stream locally causes a cooling of the extruded film to create a local mark, and/or further comprising: controlling the temperature of the gas to be lower than the temperature of the film exiting the film extruder (1) and wherein preferably the cooling of the film material results in a detectable mark in the form of a local change of a characteristics of the film, preferably a detectable local thickness variation in comparison to other parts of the film not being cooled by the gas stream.

3. Method according to any one of claim 1 or 2, comprising the further step of:
directing two or more gas streams and/or invisible substances to the surface of the film either simultaneously or at different time periods by using an array of a plurality of nozzle means (11), wherein the array is preferably a linear array and further preferably wherein the nozzle means (11) are arranged at predetermined distances from each other, more preferably at equal distances from each other.

4. Method according to any one of claim 1 to 3, wherein the step of directing the invisible substance comprises:
blowing the invisible substance to the surface of the film, the invisible substance having a predetermined cross-section and further preferably the invisible substance being suitable to provide a local mark at a part of the film material, wherein the part has a predetermined dimension, preferably a predetermined diameter or a predetermined width and length.

5. Method according to any one of claims 2 to 4, wherein directing the gas stream comprises:
blowing the gas stream to the surface of the film, the gas stream having a predetermined cross-section and further preferably the gas stream being suitable to provide a local mark at a part of the film material, wherein the part has a predetermined dimension, preferably a predetermined diameter or a predetermined width and length.

6. Method according to any one of claims 1 to 5, wherein the step of directing the invisible substance comprises:
directing the invisible substance to a local position within one or both border regions of the film, preferably further comprising the steps of:
directing a plurality of invisible substances to one or both border regions of the film, wherein at least one nozzle means (11) and/or one or both linear arrays of nozzles are arranged substantially along a line parallel to the extrusion lip (3) of the film extruder (1) using a frame which is adapted to support the at least one nozzle means (11), wherein the nozzle means (11) is configured to be movable in a scanning manner in parallel to the extrusion lip (3) of the film extruder (1) along the width of the extruded film (7) or web and/or to support the linear array of nozzle means (11) at one or both ends of the extrusion lip (3) of a film extruder (1).

7. Method according to any one of claims 2 to 6, wherein directing the gas stream comprises:
directing the gas stream to a local position within one or both border regions of the film, preferably further comprising the steps of:
directing a plurality of gas streams to one or both border regions of the film, wherein at least one nozzle means (11) and/or one or both linear arrays of nozzles are arranged substantially along a line parallel to the extrusion lip (3) of the film extruder (1) using a frame which is adapted to support the at least one nozzle means (11), wherein the nozzle means (11) is configured to be movable in a scanning manner in parallel to the extrusion lip (3) of the film extruder (1) along the width of the extruded film (7) or web and/or to support the linear array of nozzle means (11) at one or both ends of the extrusion lip (3) of a film extruder (1).

8. Method according to any one of claims 1 to 7, further comprising:
providing n nozzle means (11) being arranged in a linear array, wherein n is preferably in the range of 1 to 30, preferably 2 to 20, more preferably 5 to 10 and further preferably wherein the nozzle means (11) being arranged in a 1 to m correspondence with respect to individual adjusting means (5) for adjusting the local width of the film extruder (1), wherein preferably m is in the range of 1 to 20 and more preferably 1 to 5.

9. Method according to claim 8, further comprising:
controlling the delivery of the stream of gas and/or the invisible substance to each one of the nozzle means (11) by using control means,
wherein the stream of gas and/or the invisible substance is intermittently provided to at least one or to a specific number of the plurality of nozzle means (11) or to all nozzle means (11) to create an array of dot like marks and/or
wherein the stream of gas and/or the invisible substance is continuously provided for a predetermined time to at least one or to a specific number of the plurality of nozzle means (11) or to all nozzle means (11) to create an array of linear marks.

10. A method for automatically detecting marks on extruded films (7), in particular on stretched films, comprising:
detecting marks on the film in the form of an invisible substance on the film's surface by using a detector, wherein the detector comprises optical means for detecting said invisible substance on the film's surface, wherein the marks are preferably created using a method according to any one of claims 1 to 9, and
determining the lateral position of the detected marks in relation to a reference position preferably to one or both edges of the film by using determining means, and
**characterized in that** the invisible substance is a fluorescent ink.

11. A method for automatically controlling a film extruder (1) in particular for automatically controlling the thickness of extruded films (7), in particular of stretched films, comprising:
a method according to any one of claims 1 to 9,
a method for detecting marks and for providing information of the lateral position of the marks preferably according to claim 10,
measuring the thickness of the film using a gauging instrument,
and controlling individual adjusting means (5) for adjusting the local width of the film extruder (1) on the basis of measurement results of the gauging instrument and the information of the lateral position of the marks by using further control means.

## Patentansprüche

1. Verfahren zum Bereitstellen von Markierungen auf extrudierten Folien (7), insbesondere auf gestreckten Folien, die aus einer Extrusionslippe (3) eines Folienextruders (1) austreten, das den Schritt aufweist:
Richten mindestens einer unsichtbaren Substanz, die für das menschliche Auge unsichtbar ist, auf eine Oberfläche der Folie, die aus der Extrusionslippe (3) des Folienextruders (1) austritt, unter Verwendung mindestens einer Düseneinrichtung (11) in einer solchen Weise, dass die unsichtbare Substanz eine lokale Markierung auf der extrudierten Folie (7) erzeugt;
**dadurch gekennzeichnet, dass** die unsichtbare Substanz eine fluoreszierende Tinte ist.

2. Verfahren nach Anspruch 1, das den Schritt des Richtens der unsichtbaren Substanz und eines Gasstroms auf die Oberfläche der aus der Extrusionslippe des Folienextruders austretenden Folie aufweist, wobei der Gasstrom lokal eine Kühlung der extrudierten Folie bewirkt, um eine lokale Markierung zu erzeugen, und/oder das ferner aufweist: Steuern der Temperatur des Gases so, dass sie niedriger ist als die Temperatur der aus dem Folienextruder (1) austretenden Folie, und wobei vorzugsweise die Kühlung des Folienmaterials zu einer erfassbaren Markierung in Form einer lokalen Änderung einer Eigenschaft der Folie führt, vorzugsweise einer erfassbaren lokalen Dickenänderung im Vergleich zu anderen Teilen der Folie, die nicht durch den Gasstrom gekühlt werden.

3. Verfahren nach einem der Ansprüche 1 oder 2, das den weiteren Schritt aufweist:
Richten von zwei oder mehr Gasströmen und/oder unsichtbaren Substanzen auf die Oberfläche der Folie entweder gleichzeitig oder in unterschiedlichen Zeitspannen unter Verwendung einer Anordnung von mehreren Düseneinrichtungen (11), wobei die Anordnung vorzugsweise eine lineare Anordnung ist und wobei ferner vorzugsweise die mehreren Düseneinrichtungen (11) in vorbestimmten Abständen voneinander, bevorzugter in gleichen Abständen voneinander, angeordnet sind.

4. Verfahren nach einem der Ansprüche 1 bis 3, wobei der Schritt des Richtens der unsichtbaren Substanz aufweist:
Blasen der unsichtbaren Substanz auf die Oberfläche der Folie, wobei die unsichtbare Substanz einen vorbestimmten Querschnitt aufweist und ferner bevorzugt die unsichtbare Substanz geeignet ist, eine lokale Markierung an einem Teil des Folienmaterials bereitzustellen, wobei der Teil eine vorbestimmte Abmessung, vorzugsweise einen vorbestimmten Durchmesser oder eine vorbestimmte Breite und Länge aufweist.

5. Verfahren nach einem der Ansprüche 2 bis 4, wobei das Richten des Gasstroms aufweist: Blasen des Gasstroms auf die Oberfläche der Folie, wobei der Gasstrom einen vorbestimmten Querschnitt aufweist und ferner bevorzugt der Gasstrom geeignet ist, eine lokale Markierung an einem Teil des Folienmaterials bereitzustellen, wobei der Teil eine vorbestimmte Abmessung, vorzugsweise einen vorbestimmten Durchmesser oder eine vorbestimmte Breite und Länge aufweist.

6. Verfahren nach einem der Ansprüche 1 bis 5, wobei der Schritt des Richtens der unsichtbaren Substanz aufweist:
Richten der unsichtbaren Substanz auf eine lokale Position innerhalb eines oder beider Randbereiche der Folie, das vorzugsweise ferner die Schritte aufweist:
Richten von mehreren unsichtbaren Substanzen auf einen oder beide Randbereiche der Folie, wobei mindestens eine Düseneinrichtung (11) und/oder eine oder beide linearen Anordnungen von Düsen im Wesentlichen entlang einer Linie parallel zur Extrusionslippe (3) des Folienextruders (1) angeordnet sind, unter Verwendung eines Rahmens, der eingerichtet ist, um die mindestens eine Düseneinrichtung (11) zu halten, wobei die Düseneinrichtung (11) konfiguriert ist, in einer abtastenden Weise parallel zur Extrusionslippe (3) des Folienextruders (1) entlang der Breite der extrudierten Folie (7) oder Bahn beweglich zu sein und/oder die lineare Anordnung von Düseneinrichtungen (11) an einem oder beiden Enden der Extrusionslippe (3) eines Folienextruders (1) zu halten.

7. Verfahren nach einem der Ansprüche 2 bis 6, wobei das Richten des Gasstroms aufweist:
Richten des Gasstroms auf eine lokale Position innerhalb eines oder beider Randbereiche der Folie, das vorzugsweise ferner die Schritte aufweist: Richten von mehreren Gasströmen auf einen oder beide Randbereiche der Folie, wobei mindestens eine Düseneinrichtung (11) und/oder eine oder beide linearen Anordnungen von Düsen im Wesentlichen entlang einer Linie parallel zur Extrusionslippe (3) des Folienextruders (1) angeordnet sind, unter Verwendung eines Rahmens, der eingerichtet ist, um die mindestens eine Düseneinrichtung (11) zu halten, wobei die Düseneinrichtung (11) konfiguriert ist, in einer abtastenden Weise parallel zur Extrusionslippe (3) des Folienextruders (1) entlang der Breite der extrudierten Folie (7) oder Bahn beweglich zu sein und/oder die lineare Anordnung von Düseneinrichtungen (11) an einem oder beiden Enden der Extrusionslippe (3) eines Folienextruders (1) zu halten.

8. Verfahren nach einem der Ansprüche 1 bis 7, das ferner aufweist:
Bereitstellen von n Düseneinrichtungen (11), die in einer linearen Anordnung angeordnet sind, wobei n vorzugsweise im Bereich von 1 bis 30, vorzugsweise 2 bis 20, besonders bevorzugt 5 bis 10 liegt, und wobei die Düseneinrichtungen (11) ferner vorzugsweise in einer 1 zu m-Entsprechung in Bezug auf einzelne Einstelleinrichtungen (5) zum Einstellen der lokalen Breite des Folienextruders (1) angeordnet sind, wobei m vorzugsweise im Bereich von 1 bis 20 und bevorzugter 1 bis 5 liegt.

9. Verfahren nach Anspruch 8, das ferner aufweist:
Steuern der Zufuhr des Gasstroms und/oder der unsichtbaren Substanz zu jeder der Düseneinrichtungen (11) unter Verwendung einer Steuereinrichtung,
wobei der Gasstrom und/oder die unsichtbare Substanz intermittierend mindestens einer oder einer bestimmten Anzahl der mehreren Düseneinrichtungen (11) oder allen Düseneinrichtungen (11) zugeführt wird, um eine Anordnung von punktartigen Markierungen zu erzeugen, und/oder
wobei der Gasstrom und/oder die unsichtbare Substanz kontinuierlich eine vorbestimmte Zeit lang mindestens einer oder einer bestimmten Anzahl der mehreren Düseneinrichtungen (11) oder allen Düseneinrichtungen (11) zugeführt wird, um eine Anordnung von linearen Markierungen zu erzeugen.

10. Verfahren zum automatischen Erfassen von Markierungen auf extrudierten Folien (7), insbesondere auf gestreckten Folien, das aufweist:
Erfassen von Markierungen auf der Folie in Form einer unsichtbaren Substanz auf der Oberfläche der Folie unter Verwendung eines Detektors, wobei der Detektor eine optische Einrichtung zum Erfassen dieser unsichtbaren Substanz auf der Oberfläche der Folie aufweist, wobei die Markierungen vorzugsweise unter Verwendung eines Verfahrens nach einem der Ansprüche 1 bis 9 erzeugt werden, und
Bestimmen der lateralen Position der erfassten Markierungen in Bezug auf eine Referenzposition, vorzugsweise eine oder beide Kanten der Folie, unter Verwendung einer Bestimmungseinrichtung, und
**dadurch gekennzeichnet, dass** die unsichtbare Substanz eine fluoreszierende Tinte ist.

11. Verfahren zum automatischen Steuern eines Folienextruders (1), insbesondere zum automatischen Steuern der Dicke von extrudierten Folien (7), insbesondere von gestreckten Folien, das aufweist:
ein Verfahren nach einem der Ansprüche 1 bis 9,
ein Verfahren zum Erfassen von Markierungen und zum Bereitstellen von Informationen über die laterale Position der Markierungen, vorzugsweise nach Anspruch 10,
Messen der Dicke der Folie unter Verwendung eines Messinstruments,
und Steuern einzelner Einstelleinrichtungen (5) zum Einstellen der lokalen Breite des Folienextruders (1) auf der Basis von Messergebnissen des Messinstruments und der Informationen über die laterale Position der Markierungen unter Verwendung einer weiteren Steuereinrichtung.

## Revendications

1. Procédé d'exécution de marques sur des films extrudés (7), en particulier sur des films étirés sortant d'une lèvre d'extrusion (3) d'une extrudeuse de films (1), comprenant l'étape de :
guidage d'au moins une substance invisible à l'œil humain vers une surface du film sortant de la lèvre d'extrusion (3) de l'extrudeuse de films (1) au moyen d'au moins une unité de buse (11), de telle manière que la substance invisible génère une marque locale sur le film extrudé (7), et
**caractérisé en ce que** la substance invisible est une encre fluorescente.

2. Procédé selon la revendication 1, comprenant l'étape de guidage de la substance invisible et d'un flux gazeux vers la surface du film sortant de la lèvre d'extrusion de l'extrudeuse de films, où le flux gazeux provoque localement un refroidissement du film extrudé pour générer une marque locale, et/ou comprenant en outre : la commande d'une température de gaz inférieure à la température du film sortant de l'extrudeuse de films (1), et où le refroidissement du matériau de film aboutit avantageusement à une marque détectable sous la forme d'un changement local d'une caractéristique du film, préférentiellement une variation d'épaisseur locale détectable en comparaison avec d'autres parties du film non refroidies par le flux gazeux.

3. Procédé selon la revendication 1 ou la revendication 2, comprenant l'autre étape de :
guidage d'au moins deux flux gazeux et/ou de substances invisibles vers la surface du film, soit simultanément, soit à des moment différents, au moyen d'un réseau d'une pluralité d'unités de buse (11), ledit réseau étant avantageusement un réseau linéaire, et préférentiellement où la pluralité d'unités de buse (11) sont disposées à des distances définies l'une de l'autre, tout particulièrement à distance égale l'une de l'autre.

4. Procédé selon l'une des revendications 1 à 3, où l'étape de guidage de la substance invisible comprend :
le soufflage de la substance invisible vers la surface du film, ladite substance invisible ayant une section transversale définie et ladite substance invisible étant en outre préférentiellement adaptée pour réaliser une marque locale sur une partie du matériau de film, ladite partie présentant une dimension définie, préférentiellement un diamètre défini ou une largeur et une longueur définies.

5. Procédé selon l'une des revendications 2 à 4, où le guidage du flux gazeux comprend :
le soufflage du flux gazeux vers la surface du film, ledit flux gazeux ayant une section transversale définie et ledit flux gazeux étant en outre préférentiellement adapté pour réaliser une marque locale sur une partie du matériau de film, ladite partie présentant une dimension définie, préférentiellement un diamètre défini ou une largeur et une longueur définies.

6. Procédé selon l'une des revendications 1 à 5, où l'étape de guidage la substance invisible comprend :
le guidage de la substance invisible vers un emplacement local à l'intérieur d'une zone de bordure, ou des deux zones de bordure du film, comprenant en outre préférentiellement les étapes de :
guidage d'une pluralité de substances invisibles vers une zone de bordure, ou les deux zones de bordure du film, où au moins one unité de buse (11) et/ou un ou deux réseaux linéaires de buses sont disposés sensiblement sur une ligne parallèle à la lèvre d'extrusion (3) de l'extrudeuse de films (1) au moyen d'un cadre adapté pour supporter ladite au moins une unité de buse (11), ladite unité de buse (11) étant prévue pour être mobile par balayage parallèlement à la lèvre d'extrusion (3) de l'extrudeuse de films (1) sur la largeur du film ou de la bande extrudés (7) et/ou pour supporter le réseau linéaire d'unités de buse (11) à une extrémité, ou aux deux extrémités de la lèvre d'extrusion (3) d'une extrudeuse de films (1).

7. Procédé selon l'une des revendications 2 à 6, où le guidage du flux gazeux comprend :
le guidage du flux gazeux vers un emplacement local à l'intérieur d'une zone de bordure, ou des deux zones de bordure du film, comprenant en outre préférentiellement les étapes de :
guidage d'une pluralité de flux gazeux vers une zone de bordure, ou les deux zones de bordure du film, où au moins une unité de buse (11) et/ou un ou deux réseaux linéaires de buses sont disposés sensiblement sur une ligne parallèle à la lèvre d'extrusion (3) de l'extrudeuse de films (1) au moyen d'un cadre adapté pour supporter ladite au moins une unité de buse (11), ladite unité de buse (11) étant prévue pour être mobile par balayage parallèlement à la lèvre d'extrusion (3) de l'extrudeuse de films (1) sur la largeur du film ou de la bande extrudés (7) et/ou pour supporter le réseau linéaire d'unités de buse (11) à une extrémité, ou aux deux extrémités de la lèvre d'extrusion (3) d'une extrudeuse de films (1).

8. Procédé selon l'une des revendications 1 à 7, comprenant en outre :
la préparation de n unités de buse (11) disposées en réseau linéaire, où n est avantageusement compris entre 1 et 30, préférentiellement entre 2 et 20, plus particulièrement entre 5 et 10, et tout particulièrement où l'unité de buse (11) est disposée en correspondance de 1 à m par rapport à une unité de réglage individuelle (5) pour le réglage de la largeur locale de l'extrudeuse de films (1), m étant avantageusement compris entre 1 et 20 et préférentiellement entre 1 et 5.

9. Procédé selon la revendication 8, comprenant en outre :
la commande du flux gazeux et/ou de la substance invisible vers chacune des unité de buse (11) au moyen d'une unité de commande,
où le flux gazeux et/ou la substance invisible sont refoulés de manière intermittente vers au moins une unité de buse, ou vers un nombre spécifique de la pluralité d'unités de buse (11), ou vers toutes les unités de buse (11) pour générer un réseau de marques en forme de pastilles et/ou
où le flux gazeux et/ou la substance invisible sont délivrés de manière continue pendant une durée définie vers au moins une unité de buse, ou vers un nombre spécifique de la pluralité d'unités de buse (11), ou vers toutes les unités de buse (11) pour générer un réseau de marques linéaires.

10. Procédé de détection automatique de marques sur des films extrudés (7), en particulier sur des films étirés, comprenant :
la détection de marques sur le film sous la forme d'une substance invisible sur la surface du film au moyen d'un détecteur, ledit détecteur comprenant un moyen optique pour la détection de la substance invisible sur la surface du film, les marques étant préférentiellement générées au moyen du procédé selon l'une des revendications 1 à 9, et
la détermination de position latérale des marques détectées par rapport à un emplacement de référence, préférentiellement un bord ou les deux bords du film au moyen d'une unité de détermination, et
**caractérisé en ce que** la substance invisible est une encre fluorescente.

11. Procédé de commande automatique d'une extrudeuse de films (1), en particulier de commande automatique de l'épaisseur de films extrudés (7), en particulier de films étirés, comprenant :
le procédé selon l'une des revendications 1 à 9,
le procédé de détection de marques et de délivrance d'informations sur la position latérale des marques, préférentiellement selon la revendication 10,
la mesure de l'épaisseur du film au moyen d'un appareil de mesure,
et la commande d'une unité de réglage individuelle (5) pour régler la largeur locale de l'extrudeuse de films (1) sur la base de résultats de mesure de l'appareil de mesure et des informations de position latérale des marques au moyen d'une autre unité de commande.
